# Europäisches Patentamt

# European Patent Office

# Office européen des brevets

(11) Veröffentlichungsnummer : **0 469 659 B1**

(12) ## EUROPÄISCHE PATENTSCHRIFT

(45) Veröffentlichungstag der Patentschrift :
08.06.94 Patentblatt 94/23

(51) Int. Cl.$^5$ : **B01D 53/34**

(21) Anmeldenummer : **91201757.1**

(22) Anmeldetag : **05.07.91**

(54) **Simultane Entfernung von SO2 und H2S aus Abgasen.**

(30) Priorität : **27.07.90 DE 4023926**

(43) Veröffentlichungstag der Anmeldung :
**05.02.92 Patentblatt 92/06**

(45) Bekanntmachung des Hinweises auf die
Patenterteilung :
**08.06.94 Patentblatt 94/23**

(84) Benannte Vertragsstaaten :
**AT BE CH DE DK ES FR GB GR IT LI LU NL SE**

(56) Entgegenhaltungen :
**US-A- 4 276 271**

(56) Entgegenhaltungen :
**US-A- 4 842 843**
**J.AIR POLLUTION CONTROL ASSOCIATION,-
vol. 7, no. 2, August 1957, Bruceton,PA.,USA,
Seiten 109-115; J.H.FIELD et al.:"Cost estimates of liquid-scrubbing processes for removing of sulfur dioxide from flue gases"**

(73) Patentinhaber : **METALLGESELLSCHAFT
Aktiengesellschaft
Postfach 10 15 01,
Reuterweg 14
D-60015 Frankfurt (DE)**

(72) Erfinder : **Röhrborn, Hans-Joachim, Dr.
Terniepenweg 88
W-4133 Neukirchen-Vluyn (DE)**

EP 0 469 659 B1

**Beschreibung**

Die Erfindung betrifft ein Verfahren zur simultanen Entfernung von $SO_2$ und $H_2S$ aus Abgasen.

Werden Braunkohle, Erdgas oder Petrolkoks als Brennstoffe oder Rohstoffe für chemische Prozesse eingesetzt, so entstehen häufig Abgase, die Schwefel in gebundener Form enthalten. So fallen beispielsweise in Kraftwerken bei der Dampferzeugung, in Röstöfen bei der Schwefelsäurefabrikation sowie in Drehrohröfen bei der Herstellung von Titandioxid, Zinksulfid oder Bariumsulfid Abgase mit einer relativ hohen Konzentration an $SO_2$ oder auch $H_2S$ an, die einen Restgehalt an Sauerstoff enthalten. Zur simultanen Entfernung von $SO_2$ und $H_2S$ aus den Abgasen werden diese Schadstoffe an Adsorptionskatalysatoren katalytisch zu Schwefel umgesetzt. Dieser Schwefel wird an der Katalysatoroberfläche adsorbiert und anschließend bei einer Heißgasdesorption als Elementarschwefel hoher Reinheit gewonnen. Als Adsorptionskatalysator wird beispielsweise Aluminiumoxid verwendet (Ullmanns Enzyklopädie der technischen Chemie, 4. Aufl., Bd. 2, Seite 614).

Bei diesem bekannten Verfahren zur simultanen Entfernung von $SO_2$ und $H_2S$ aus Abgasen ist nachteilig, daß die Stöchiometrie der Reaktionsgleichung

$$2H_2S + SO_2 \rightarrow 3S + 2H_2O$$

im Abgas weitgehend eingehalten werden muß. Geschieht dies nicht, können die Grenzwerte der TA Luft vom 27.2.1986 für die Schadstoffe $SO_2$ und $H_2S$ im Reingas nur mit einem relativ hohen technischen Aufwand unterschritten werden.

In der US-A-4 842 843 wird ein Verfahren zur simultanen Entfernung von $SO_2$ und $H_2S$ aus Abgasen beschrieben, bei dem ein Festbettabsorber aus ZnO eingesetzt wird. Das nach der chemischen Reaktion mit den Schwefelkomponenten vorliegende ZnS wird mit einem Sauerstoff und Wasserdampf enthaltenden Gas regeneriert.

Der Erfindung liegt die Aufgabe zugrunde, ein Verfahren zur simultanen Entfernung von $SO_2$ und $H_2S$ aus Abgasen zu schaffen, das kostengünstig durchführbar ist und mit welchem die Grenzwerte der TA Luft vom 27.02.1986 für $SO_2$ und $H_2S$ im Reingas relativ weit unterschritten werden.

Die der Erfindung zugrundeliegende Aufgabe wird dadurch gelöst, daß das $SO_2$ und $H_2S$ enthaltende Abgas (4) in einer ersten Stufe (1) mit einer Suspension (5a), die 60 bis 95 g/l $ZnSO_3$ und 80 bis 90 g/l ZnO und 0,1 bis 1,0 g/l ZnS enthält, im Gegenstrom in Kontakt gebracht wird, wobei 40 bis 60 Vol.-% der im Sumpf (1b) der ersten Stufe (1) anfallenden Suspension (8), die 20 bis 35 g/l ZnS und 130 bis 145 g/l $ZnSO_4$ und 0,1 bis 8 g/l $ZnSO_3$ enthält, aus dem Sumpf (1b) abgezogen und erneut kontinuierlich am Kopf (1a) der ersten Stufe (1) eingespeist werden, daß das Abgas (9) am Kopf (1a) der ersten Stufe (1) abgezogen und in einer zweiten Stufe (2) mit einer Suspension (6), die 80 bis 150 g/l ZnO enthält, und mit einer weiteren Suspension (5b), die 60 bis 95 g/l $ZnSO_3$ und 80 bis 90 g/l ZnO und 0,1 bis 1,0 g/l ZnS enthält, im Gegenstrom in Kontakt gebracht wird, wobei letztere Suspension (5b), die 40 bis 60 Vol.-% der im Sumpf (2b) der zweiten Stufe (2) anfallenden Suspension (5) entspricht, aus dem Sumpf (2b) der zweiten Stufe (2) abgezogen und erneut kontinuierlich am Kopf (2a) der zweiten Stufe (2) eingespeist wird, daß als die 60 bis 95 g/l $ZnSO_3$ und 80 bis 90 g/l ZnO und 0,1 bis 1,0 g/l ZnS enthaltende Suspension (5a), mit der das Abgas (4) in der ersten Stufe (1) im Gegenstrom in Kontakt gebracht wird, 60 bis 40 Vol.-% der im Sumpf (2b) der zweiten Stufe (2) anfallenden Suspension (5) am Kopf (1a) der ersten Stufe (1) eingespeist werden und daß das Reingas (10) am Kopf (2a) der zweiten Stufe (2) abgeführt wird.

Als erste und zweite Stufe werden Füllkörperkolonnen verwendet. Bei den in der ersten und zweiten Stufe im Kreislauf geführten Suspensionen handelt es sich um wäßrige Suspensionen, deren pH-Werte bei 2,0 bis 5,5 liegen. Es hat sich in überraschender Weise gezeigt, daß mit dem erfindungsgemäßen Verfahren die Schadstoffe $H_2S$ und $SO_2$ fast vollständig aus Abgasen entfernt werden, auch wenn sie in schwankendem Konzentrationsverhältnis zueinander im Abgas vorhanden sind. Das erfindungsgemäße Verfahren ermöglicht infolge der relativ hohen mittleren Berieselungsdichte von 20 bis 60 $m^3/(m^2.h)$ in der ersten und zweiten Stufe eine weitgehend quantitative Umsetzung der Reaktionspartner, so daß die Entfernung der Schadstoffe $H_2S$ und $SO_2$ aus Abgasen kostengünstig durchgeführt wird.

Eine bevorzugte Ausgestaltung der Erfindung besteht darin, daß als erste Stufe und/oder als zweite Stufe geordnete Waschsäulen verwendet werden. Unter dem Begriff "geordnete Waschsäulen" sind diejenigen Füllkörperkolonnen zu verstehen, in welchen die Füllkörper ihrer geometrischen Form entsprechend nach einem bestimmten System angeordnet sind. Dabei können auch Füllkörper-Packungen, die aus vorgefertigten, geordneten Elementen bestehen, verwendet werden. Werden als erste Stufe und/oder zweite Stufe geordnete Waschsäulen verwendet, so wird der Druckverlust in den einzelnen Stufen in vorteilhafter Weise verkleinert.

Gemäß einer weiteren bevorzugten Ausgestaltung der Erfindung ist die zweite Stufe auf der ersten Stufe innerhalb einer Trennkolonne angeordnet. Dies hat den Vorteil, daß bei der Anordnung der ersten und zweiten Stufe Rohrleitungen eingespart werden, was zu einer weiteren Reduzierung der Verfahrenskosten führt.

Nach einer weiteren bevorzugten Ausgestaltung der Erfindung wird ein Teil der im Sumpf der ersten Stufe anfallenden Suspension aus der ersten Stufe abgeführt und mit 48 bis 97%iger $H_2SO_4$ bis zu einem pH-Wert von 0,6 bis 1,0 versetzt. Dabei entsteht ein

Gemisch aus $SO_2$ und $H_2S$ gemäß den folgenden Reaktionsgleichungen:

$$ZnSO_3 + H_2SO_4 \longrightarrow ZnSO_4 + H_2O + SO_2$$
$$ZnS + H_2SO_4 \longrightarrow ZnSO_4 + H_2S$$

Das Gemisch aus $SO_2$ und $H_2S$ kann in einer Schwefelsäurefabrik weiterverarbeitet werden, wobei $H_2S$ zunächst mit Luft zu $SO_2$ oxidiert wird.

Gemäß einer weiteren bevorzugten Ausgestaltung der Erfindung wird ein Teil der im Sumpf der ersten Stufe anfallenden Suspension aus der ersten Stufe abgeführt und mit $Cl_2$ bis zu einem pH-Wert von 1,3 bis 1,8 versetzt. Dabei laufen die folgenden chemischen Reaktionen ab:

$$ZnSO_3 + Cl_2 + H_2O \longrightarrow ZnSO_4 + 2HCl$$
$$ZnS + Cl_2 \longrightarrow ZnCl_2 + S$$

Der bei der Chlorierung anfallende Schwefel wird anschließend aus der Lösung abfiltriert.

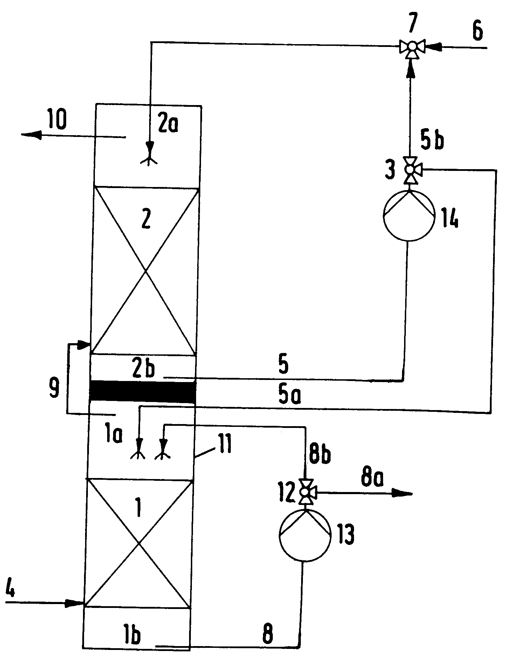

Der Gegenstand der Erfindung wird nachfolgend anhand der Zeichnung (Figur) näher erläutert.

Die Figur zeigt den schematischen Aufbau einer Kolonne mit der ersten und zweiten Stufe.

In der Figur ist eine Kolonne (11) dargestellt, in welcher die erste Stufe (1) und die zweite Stufe (2) übereinander angeordnet sind. Das $SO_2$ und $H_2S$ enthaltende Abgas (4) wird horizontal in die erste Stufe (1) geleitet und mit einer Suspension (5a), die $ZnSO_3$, $ZnO$ und $ZnS$ enthält, im Gegenstrom in Kontakt gebracht. Dabei laufen die folgenden chemischen Reaktionen ab, wobei der benötigte Sauerstoff dem Abgas entnommen wird:

$$H_2S + ZnO \longrightarrow ZnS + H_2O$$
$$ZnO + SO_2 \longrightarrow ZnSO_3$$
$$ZnSO_3 + 1/2\ O_2 \longrightarrow ZnSO_4$$

Im Sumpf (1b) der ersten Stufe (1) fällt dabei eine Suspension (8) an, die $ZnS$, $ZnSO_4$ und $ZnSO_3$ enthält. Diese Suspension (8) wird aus dem Sumpf (1b) der ersten Stufe (1) aus der Kolonne (11) abgeführt. Ein Teil (8b) dieser Suspension (8) wird über eine Pumpe (13) dem Kopf (1a) der ersten Stufe (1) zugeführt und erneut mit dem $SO_2$ und $H_2S$ enthaltenden Abgas (4) im Gegenstrom in Kontakt gebracht. Der andere Teil (8a) der Suspension (8) wird über den Dreiwegehahn (12) aus dem System abgeführt und entweder durch Zusatz von $H_2SO_4$ oder $Cl_2$ aufgearbeitet. Das von $SO_2$ und $H_2S$ abgereicherte Abgas (9) wird am Kopf (1a) der ersten Stufe (1) abgeführt und über dem Sumpf (2b) der zweiten Stufe (2) zugeführt. In der zweiten Stufe (2) wird das von $SO_2$ und $H_2S$ abgereicherte Abgas (9) mit einer zweiten Suspension (6), die $ZnO$ enthält und mit einer dritten Suspension (5b), die $ZnO$, $ZnSO_3$ und $ZnS$ enthält, im Gegenstrom in Kontakt gebracht. Als dritte Suspension (5 b) wird dabei ein Teil der im Sumpf (2 b) der zweiten Stufe (2) anfallenden Suspension (5) verwendet. Vor der Einspeisung der zweiten Suspension (6) und der dritten Suspension (5b) in die zweite Stufe (2) werden die Suspensionen (6) und (5b) über eine Mischstelle (7) miteinander vermischt. In der zweiten Stufe (2) rea-gieren die Schadstoffe $H_2S$ und $SO_2$ mit dem $ZnO$ nach den folgenden Reaktionsgleichungen:

$$H_2S + ZnO \longrightarrow ZnS + H_2O$$
$$SO_2 + ZnO \longrightarrow ZnSO_3$$

Der andere Teil (5a) der Suspension (5) wird über den Dreiwegehahn (3) abgeführt und am Kopf (1a) in die erste Stufe (1) eingespeist. Das Reingas (10) wird am Kopf (2a) aus der zweiten Stufe abgeführt.

Die Erfindung wird nachfolgend anhand eines Beispiels näher beschrieben.

Beispiel

700 m³/h eines Abgases (4), das 980 mg/Nm³ tr. $SO_2$ und 300 mg/Nm³ tr. $H_2S$ enthält, werden einer ersten Stufe (1), die als eine geordnete Waschsäule ausgebildet ist, zugeführt und im Gegenstrom mit 5 m³/h einer ersten Suspension (5a), die 62,7 g/l $ZnSO_3$, 85,5 g/l $ZnO$ und 0,3 g/l $ZnS$ enthält, in Kontakt gebracht. In der ersten Stufe (1) beträgt der mittlere pH-Wert 2,0. Die Berieselungsdichte beträgt in der ersten Stufe (1) 40 m³/(m².h). Von der im Sumpf der ersten Stufe (1) anfallenden Suspension (8), die 34,3 g/l $ZnS$ und 0,9 g/l $ZnSO_3$ und 135,9 g/1 $ZnSO_4$ enthält, werden 60 Vol-% abgeführt und erneut am Kopf (1a) der ersten Stufe (1) mit dem Abgas im Gegenstrom in Kontakt gebracht. 40 Vol-% der im Sumpf (1b) der ersten Stufe (1) anfallenden Suspension (8) werden aus dem System abgeführt und durch Zugabe von $H_2SO_4$ aufgearbeitet. Das an $SO_2$ und $H_2S$ abgereicherte Abgas (9), das einen $SO_2$-Gehalt von 850 mg/Nm³ tr. und einen $H_2S$-Gehalt von 200 mg/Nm³ tr. aufweist, wird dem Sumpf (2 b) der zweiten Stufe (2) zugeführt. Diese zweite Stufe (2) ist ebenfalls als geordnete Waschsäule ausgebildet. Das an $SO_2$ und $H_2S$ abgereicherte Abgas (9) wird in der zweiten Stufe mit 5 m³/h einer Suspension (6), die 117 g/l $ZnO$ enthält und mit 4,8 m³/h einer dritten Suspension (5 b), die 62,7 g/l $ZnSO_3$, 85,5 g/l $ZnO$ und 0,3 g/l $ZnS$ enthält und die der im Sumpf (2 b) der zweiten Stufe (2) anfallenden Suspension (5) entnommen wird, im Gegenstrom in Kontakt gebracht. Der mittlere pH-Wert der zweiten Stufe liegt zwischen 5,0 und 5,5. Die Berieselungsdichte in der zweiten Stufe (2) beträgt 40 m³/(m².h). Die verbleibenden 5 m³/h der im Sumpf (2 b) der zweiten Stufe (2) anfallenden Suspension (5) werden aus der zweiten Stufe (2) abgeführt und als erste Suspension (5 a) in die erste Stufe (1) am Kopf (1 a) eingespeist. Das am Kopf (2a) der zweiten Stufe (2) abgeführte Reingas (10) hat einen $SO_2$-Gehalt von 70 mg/Nm³ tr. und einen $H_2S$-Gehalt von 1 mg/Nm³ tr. (tr = trocken).

Mit dem erfindungsgemäßen Verfahren werden somit die Grenzwerte der TA Luft vom 27.2.1986 für $H_2S$ (5 mg/Nm³) und $SO_2$ (500 mg/Nm³) relativ weit unterschritten.

## Patentansprüche

1. Verfahren zur simultanen Entfernung von $SO_2$ und $H_2S$ aus Abgasen, dadurch gekennzeichnet, daß das $SO_2$ und $H_2S$ enthaltende Abgas (4) in einer ersten Stufe (1) mit einer Suspension (5a), die 60 bis 95 g/l $ZnSO_3$ und 80 bis 90 g/l ZnO und 0,1 bis 1,0 g/l ZnS enthält, im Gegenstrom in Kontakt gebracht wird, wobei 40 bis 60 Vol.-% der im Sumpf (1b) der ersten Stufe (1) anfallenden Suspension (8), die 20 bis 35 g/l ZnS und 130 bis 145 g/l $ZnSO_4$ und 0,1 bis 8 g/l $ZnSO_3$ enthält, aus dem Sumpf (1b) abgezogen und erneut kontinuierlich am Kopf (1a) der ersten Stufe (1) eingespeist werden, daß das Abgas (9) am Kopf (1a) der ersten Stufe (1) abgezogen und in einer zweiten Stufe (2) mit einer Suspension (6), die 80 bis 150 g/l ZnO enthält, und mit einer weiteren Suspension (5b), die 60 bis 95 g/l $ZnSO_3$ und 80 bis 90 g/l ZnO und 0,1 bis 1,0 g/l ZnS enthält, im Gegenstrom in Kontakt gebracht wird, wobei letztere Suspension (5b), die 40 bis 60 Vol.-% der im Sumpf (2b) der zweiten Stufe (2) anfallenden Suspension (5) entspricht, aus dem Sumpf (2b) der zweiten Stufe (2) abgezogen und erneut kontinuierlich am Kopf (2a) der zweiten Stufe (2) eingespeist wird, daß als die 60 bis 95 g/l $ZnSO_3$ und 80 bis 90 g/l ZnO und 0,1 bis 1,0 g/l ZnS enthaltende Suspension (5a), mit der das Abgas (4) in der ersten Stufe (1) im Gegenstrom in Kontakt gebracht wird, 60 bis 40 Vol.-% der im Sumpf (2b) der zweiten Stufe (2) anfallenden Suspension (5) am Kopf (1a) der ersten Stufe (1) eingespeist werden und daß das Reingas (10) am Kopf (2a) der zweiten Stufe (2) abgeführt wird.

2. Verfahren nach Anspruch 1, dadurch gekennzeichnet, daß als erste Stufe (1) und/oder als zweite Stufe (2) geordnete Waschsäulen verwendet werden.

3. Verfahren nach Anspruch 1 oder 2, dadurch gekennzeichnet, daß die zweite Stufe (2) auf der ersten Stufe (1) innerhalb einer Trennkolonne (11) angeordnet ist.

4. Verfahren nach einem der Ansprüche 1 bis 3, dadurch gekennzeichnet, daß ein Teil der im Sumpf der ersten Stufe (1) anfallenden Suspension (8) aus der ersten Stufe (1) abgeführt wird und mit 48 bis 97%iger $H_2SO_4$ bis zu einem pH-Wert von 0,6 bis 1,0 versetzt wird.

5. Verfahren nach einem der Ansprüche 1 bis 3, dadurch gekennzeichnet, daß ein Teil der im Sumpf der ersten Stufe (1) anfallenden Suspension (8) aus der ersten Stufe (1) abgeführt wird und mit $Cl_2$ bis zu einem pH-Wert von 1,3 bis 1,8 versetzt wird.

## Claims

1. A process for the simultaneous removal of $SO_2$ and $H_2S$ from exhaust gases, characterised in that the exhaust gas (4) containing $SO_2$ and $H_2S$ in a first stage (1) is brought into contact in a counter-current flow with a suspension (5a) which contains 60 to 95 g/l $ZnSO_3$ and 80 to 90 g/l ZnO and 0.1 to 1.0 g/l ZnS, with 40 to 60% by volume of the suspension (8) produced in the sump (1b) of the first stage (1), which suspension contains 20 to 35 g/l ZnS and 130 to 145 g/l $ZnSO_4$ and 0.1 to 8 g/l $ZnSO_3$, being removed from the sump (1b) and continuously fed back to the head (1a) of the first stage (1), that the exhaust gas (9) is withdrawn at the head (1a) of the first stage (1) and in a second stage (2) is brought into contact in a counter-current flow with a suspension (6) which contains 80 to 150 g/l ZnO, and with an additional suspension (5b) which contains 60 to 95 g/l $ZnSO_3$ and 80 to 90 g/l ZnO and 0.1 to 1.0 g/l ZnS, said latter suspension (5b), which corresponds to 40 to 60% by volume of the suspension (5) produced in the sump (2b) of the second stage (2), being removed from the sump (2b) of the second stage (2) and being fed back in continuously at the head (2a) of the second stage (2), that 60 to 40% by volume of the suspension (5) produced in the sump (2b) of the second stage (2) is fed in at the head (1a) of the first stage (1) as the suspension (5a) containing 60 to 95 g/l $ZnSO_3$ and 80 to 90 g/l ZnO and 0.1 to 1.0 g/l ZnS with which the exhaust gas (4) is brought into contact in a counter-current flow in the first stage (1), and that the pure gas (10) is removed at the head (2a) of the second stage (2).

2. A process according to Claim 1, characterised in that ordered washing columns are used as the first stage (1) and/or as the second stage (2).

3. A process according to Claim 1 or 2, characterised in that the second stage (2) is located on the first stage (1) within a separating column (11).

4. A process according to one of Claims 1 to 3, characterised in that a portion of the suspension (8) produced in the sump of the first stage (1) is removed from the first stage (1) and 48 to 97% $H_2SO_4$ is added thereto up to a pH value of 0.6 to 1.0.

5. A process according to one of Claims 1 to 3, characterised in that a portion of the suspension (8) produced in the sump of the first stage (1) is removed from the first stage (1) and Cl₂ is added thereto up to a pH value of 1.3 to 1.8.

**Revendications**

1. Procédé d'élimination simultanée de SO₂ et de H₂S d'effluents gazeux, caractérisé en ce qu'il consiste à mettre l'effluent gazeux (4) contenant SO₂ et H₂S dans un premier étage (1) en contact à contre-courant avec une suspension (5a) qui contient de 60 à 95 g/l de ZnSO₃ et de 80 à 90 g/l de ZnO et de 0,1 à 1,0 g/l de ZnS, de 40 à 60 % en volume de la suspension (8) qui se forme en queue (1b) du premier étage (1) et qui contient de 20 à 35 g/l de ZnS et de 130 à 145 g/l de ZnSO₄ et de 0,1 à 8 g/l de ZnSO₃ étant soutirés de la queue (1b) et étant envoyés en continu à la tête (1a) du premier étage (1), à soutirer l'effluent gazeux (9) en tête (1a) du premier étage (1) et à le mettre en contact à contre-courant dans un deuxième étage (2) avec une suspension (6) qui contient de 80 à 150 g/l de ZnO et avec une autre suspension (5b) qui contient de 60 à 95 g/l de ZnSO₃ et de 80 à 90 g/l de ZnO et de 0,1 à 1,0 g/l de ZnS, la dernière suspension (5b) qui correspond aux 40 à 60 % en volume de la suspension (5) se formant en queue (2b) du deuxième étage (2) étant soutirée de la queue (2b) du deuxième étage (2) et étant envoyée à nouveau en continu à la tête (2a) du deuxième étage (2), à envoyer en tête (1a) du premier étage (1), en tant que suspension contenant de 60 à 95 g/l de ZnSO₃ et de 80 à 90 g/l de ZnO et de 0,1 à 1,0 g/l de ZnS avec laquelle l'effluent gazeux (4) vient en contact à contre-courant dans le premier étage (1), de 60 à 40 % en volume de la suspension (5) se produisant en queue (2b) du deuxième étage (2) et à soutirer le gaz (10) épuré en tête (2a) du deuxième étage (2).

2. Procédé suivant la revendication 1, caractérisé en ce qu'il consiste à utiliser comme premier étage (1) et/ou comme deuxième étage (2) des colonnes de lavage ordonnées.

3. Procédé suivant la revendication 1 ou 2, caractérisé en ce que le deuxième étage (2) est disposé sur le premier étage (1) dans une colonne (11) de séparation.

4. Procédé suivant l'une des revendications 1 à 3, caractérisé en ce qu'il consiste à évacuer du premier étage (1) une partie de la suspension (8) se formant en queue du premier étage (1) et à la mélanger à du H₂SO₄ à 48 à 97 % jusqu'à obtention d'un pH de 0,6 à 1,0.

5. Procédé suivant l'une des revendications 1 à 3, caractérisé en ce qu'il consiste à évacuer du premier étage (1) une partie de la suspension (8) se formant en queue du premier étage (1) et à la mélanger à du Cl₂ jusqu'à obtention d'un pH de 1,3 à 1,8.